# EUROPÄISCHE PATENTANMELDUNG

(11) **EP 2 727 708 A2**
(43) Veröffentlichungstag der Anmeldung: **07.05.2014**
(21) Anmeldenummer: 13005653.4
(22) Anmeldetag: 22.10.2009
(51) Int. Cl.: B29C 65/00, B29C 47/00

(54) **Verfahren zum Herstellen von Bodenplatten aus einem elastischen Kunststoffwerkstoff**

(30) Priorität: 22.10.2008 DE 102008052774
(62) Teilanmeldung aus: 09013359.6
(71) Anmelder: Nicocyl-GmbH, 44581 Castrop-Rauxel (DE)
(72) Erfinder: Fröhlich, Jakob, 58730 Fröndenberg (DE)
(74) Vertreter: Tilmann, Max Wilhelm

(57) **Zusammenfassung**

Die Erfindung betrifft ein Verfahren zum Herstellen von Bodenplatten aus einem elastischen Kunststoffwerkstoff, wobei die Bodenplatten zunächst urgeformt werden und daraufhin ein Feder-Nut-System spanend eingebracht wird.

## Beschreibung

Die Erfindung betrifft ein Verfahren zum Herstellen von Bodenplatten aus einem elastischen Kunststoffwerkstoff.

Derartige Bodenplatten sind aus dem Stand der Technik bekannt. Häufig werden diese aus Polyvinylchlorid (PVC) gefertigt und dienen als robuste und schwingungsdämpfende Bodenbeläge, die insbesondere in Werkstätten, Fabrikhallen und Bürogebäuden zum Einsatz kommen können. In der Regel werden die Bodenplatten als quadratische oder rechteckige Platten hergestellt, zur Erzeugung des Bodenbelags aneinander gelegt und mit dem Untergrund verklebt, um ein Auseinanderrutschen der einzelnen Bodenplatten zu vermeiden. Aus dem Stand der Technik sind zudem Bodenplatten bekannt, die ein Feder-Nut-System aufweisen, das es ermöglicht, die einzelnen Bodenplatten ineinander zu stecken, um hierdurch ein Verlegen der Platten zu vereinfachen und - in Abhängigkeit von der Ausführung des Feder-Nut-Systems - ein Auseinanderrutschen auch ohne ein Verkleben mit dem Untergrund zu vermeiden.

Aus Kostengründen werden die aus dem Stand der Technik bekannten Bodenplatten ausschließlich durch Urformen und insbesondere durch Spritzgießen hergestellt. Hierbei wird der Kunststoffwerkstoff grundsätzlich als Neuware eingesetzt, da lediglich Neuware ein ausreichend homogenes Schrumpfirerhalten beim Abkühlen nach dem Spritzgießen gewährleistet. Eine Verwendung von Recyclingkunststoff, die aus ökologischer und gegebenenfalls auch aus wirtschaftlicher Sicht vorteilhaft wäre, war bislang nicht vorgesehen, da das Schrumpfverhalten der aus einer Vielzahl von unterschiedlichen (Recycling-)Kunststoffkomponenten bestehenden Bodenplatten nicht ausreichend genau vorhersagbar wäre und die Bodenplatten daher nach dem Abkühlen regelmäßig nicht innerhalb der geforderten Toleranzen liegen würden.

Ausgehend von diesem Stand der Technik lag der Erfindung die Aufgabe zugrunde, ein Verfahren anzugeben, das wirtschaftlich die Fertigung derartiger Bodenplatten mit einem Feder-Nut-System auch aus einem Recyclingkunststoff ermöglicht.

Diese Aufgabe wird durch das Verfahren gemäß Patentanspruch 1 gelöst. Vorteilhafte Ausführungsformen des erfindungsgemäßen Verfahrens sind Gegenstand der abhängigen Patentansprüche und ergeben sich aus der nachfolgenden Beschreibung der Erfindung.

Der Kem der Erfindung sieht vor, das Herstellen von Bodenplatten aus einem elastischen Kunststoffwerkstoff, die ein Feder-Nut-System aufweisen, zweistufig durchzuführen, indem die Bodenplatten zunächst urgeformt werden und das Feder-Nut-System daraufhin durch Spanen eingebracht wird.

Durch das erfindungsgemäße Verfahren wird es ermöglicht, die Bodenplatten auch aus einem Recyclingkunststoff herzustellen, indem diese zunächst mit einem Übermaß vorgeformt werden, wodurch dem schlecht kalkulierbaren Schrumpfverhalten des Recyclingkunststoffs Rechnung getragen werden kann, und das Feder-Nut-System daraufhin spanend eingebracht wird. Hierbei kann gleichzeitig die Bodenplatte hinsichtlich ihrer Abmessungen auf das geforderte Maß gebracht werden.

Bevorzugt wird Polyvinylchlorid (PVC) als Kunststoffwerkstoff verwendet, da dieser Werkstoff die erforderlichen Materialkennwerte, insbesondere hinsichtlich der Härte, der Verschleißfestigkeit und des Dämpfungsverhaltens aufweist. Zudem steht PVC, das für die Ummantelung von elektrischen Leitungen hauptsächlich verwendet wird, in großen Mengen als Recyclingmaterial zur Verfügung, das aus ökologischen und auch wirtschaftlichen Gründen besonders bevorzugt bei dem erfindungsgemäßen Verfahren verwendet werden kann.

In einer weiterhin bevorzugten Ausführungsform der vorliegenden Erfindung wird ein Feder-Nut-System eingebracht, dessen Steckrichtung parallel zur Plattenebene ausgerichtet ist. Ein solches Feder-Nut-System weist den Vorteil auf, dass es im zusammengesteckten Zustand der Bodenplatten nicht mehr sichtbar ist. Zum Einbringen eines solchen Feder-Nut-Systems können vorzugsweise ein Kopf- sowie ein Seitenfraser, die selbstverständlich auch kombiniert sein können, zum Einsatz kommen.

Ein alternatives Feder-Nut-System kann eine Steckrichtung aufweisen, die senkrecht zur Plattenebene ausgerichtet ist. Vorzugsweise kann ein solches Feder-Nut-System puzzleförmig ausgebildet sein, d.h. Hinterschnitte der zusammenwirkenden Elemente des Feder-Nut-Systems aufweisend, die eine Relativbewegung benachbarter Bodenplatten in Richtung der Plattenebene verhindern, Insbesondere ein solches puzzleförmiges Feder-Nut-System kann vorteilhafter Weise mittels eines Fingerfräsers eingebracht werden.

Als besonders vorteilhaftes Verfahren zum Urformen der Bodenplatten hat sich das Gießen und insbesondere das Spritzgießen herausgestellt. Dieses ermöglicht ein schnelles und vergleichsweise günstiges Urformen der Bodenplatten.

In einer weiterhin bevorzugten Ausführungsform der vorliegenden Erfindung ist vorgesehen, die Bodenplatten vor dem Einbringen des Feder-Nut-Systems zumindest einseitig abzuplanen. Dies ermöglicht ein besonderes passgenaues Herstellen des Feder-Nut-Systems, insbesondere wenn es sich hierbei um ein Feder-Nut-System handelt, dessen Steckrichtung parallel zur Plattenebene ausgerichtet ist. Ohne ein solches vorausgehendes Abplanen könnte das insbesondere mit der bevorzugten Verwendung von Recyclingkunststoff verbundene, schwierig kalkulierbare Schrumpfverhalten der Bodenplatten dazu führen, dass das Federelement sowie die korrespondierende Nut benachbarter Bodenplatten, die zusammen gesteckt werden sollen, einen Höhenversatz aufweisen. Durch das Abplanen, das bevorzugt durch Planfräsen erfolgen kann, kann vor dem Einbringen des Feder-Nut-Systems in die Bodenplatten sichergestellt werden, dass ein solcher Höhenversatz ausgeschlossen wird.

In einer besonders bevorzugten Ausführungsform ist vorgesehen, dass die Bodenplatten auf ihrer Unterseite, d.h. derjenigen Seite, die beim Verlegen auf dem Untergrund zum Aufliegen kommt, plangefräst werden. Hierdurch kann ein Verkleben der Bodenplatten mit dem Untergrund erheblich verbessert werden, da die Oberfläche der Bodenplatten durch das Planfräsen aufgeraut wird, wodurch die adhesive Wirkung des eingesetzten Klebstoffs erheblich verbessert werden kann.

Die Erfindung wird nachfolgend anhand von in den Zeichnungen dargestellten Ausführungsbeispielen näher erläutert.

In den Zeichnungen zeigen:
- Fig. 1 bis 3: jeweils in einer Schnittdarstellung drei unterschiedliche Bodenplatten, die mittels eines erfindungsgemäßen Verfahrens hergestellt wurden und
- Fig. 4: die Bodenplatte der Figur 3 in einer Draufsicht.

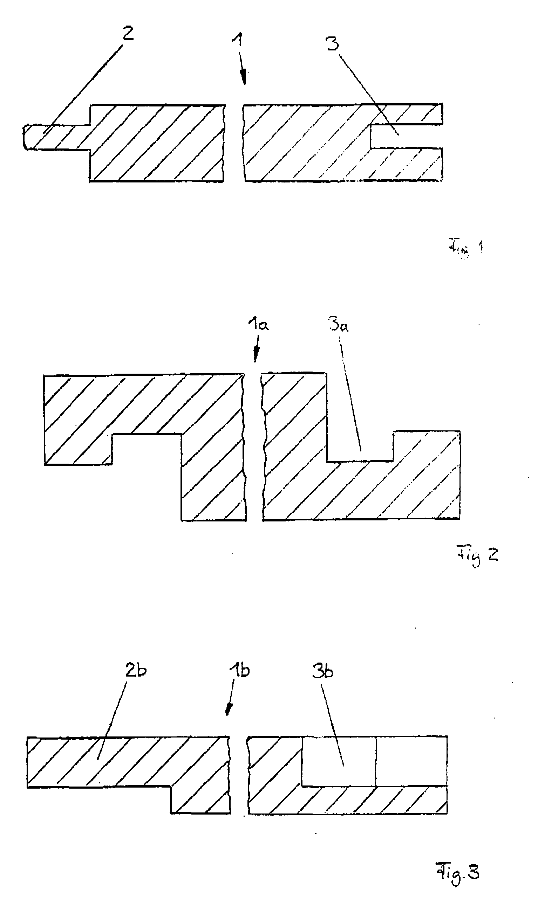

Die Figur 1 zeigt eine Bodenplatte 1 in einer Schnittdarstellung, die ein Feder-Nut-System aufweist, dessen Steckrichtung parallel zur Plattenebene ausgerichtet ist. Das Feder-Nut-System umfasst Federelemente 2, die an zwei aneinander stoßenden Kanten der quadratischen Bodenplatte 1 vorgesehen ist. An den zwei übrigen Kanten ist eine korrespondierende Nut 3 in die Bodenplatte 1 eingebracht.

Die dargestellte Bodenplatte 1 ist aus PVC-Recyclingmaterial hergestellt, wobei die Herstellung der Bodenplatte 1 folgendermaßen erfolgt. Zunächst wird das PVC-Recyclingmaterial, das eine Vielzahl alter PVC-Komponenten umfasst, granuliert und daraufhin einer Spritzgießmaschine (nicht dargestellt) zugeführt, in der dieses zunächst aufgeschmolzen und über einen Schneckenextruder unter einem Druck von bis zu 320 bar in eine entsprechend ausgeformte Kavität eines Spritzgießwerkzeugs gedrückt wird. Nachdem die Kavität des Spritzgießwerkzeugs vollständig mit dem aufgeschmolzenen PVC ausgefüllt wurde, kühlt das PVC in dem Spritzgießwerkzeug soweit ab. dass die Bodenplatte 1 handhabbar ist und aus dem Spritzgießwerkzeug entnommen werden kann. Nach dem Entnehmen aus dem Spritzgießwerkzeug wird überschüssiges Material im Bereich des Angusses abgeschnitten und die Bodenplatte 1 gegebenenfalls in diesem Bereich plangeschliffen. Daraufhin wird die Bodenplatte 1 auf ihrer Unterseite, die vorzugsweise diejenige Seite ist, an der sich der Anguss befindet, plangefräst und hierbei auf das geforderte Dickemaß gebracht. Hierbei kann vorzugsweise ein Kopffräser zum Einsatz kommen. Auf der plangefrästen Unterseite aufliegend wird die Bodenplatte 1 daraufhin in ein CNC-Bearbeitungszentrum eingebracht, in dem mittels eines kombinierten Kopf- und Seitenfräsers zunächst die Kantenlängen der Bodenplatte 1 auf das geforderte Maß gebracht und anschließend sowohl die Federelemente 2 als auch die Nuten 3 spanend eingebracht werden. Die spanende Bearbeitung der Bodenplatte erfolgt bei einer Temperatur im Bereich von 20°C bis 21 °C, um eine mangelnde Maßhaltigkeit der fertig bearbeiteten Bodenplatte aufgrund eines gegebenenfalls nachträglichen Abkühlens des Werkstoffes zu vermeiden. Die Fixierung der Bodenplatte 1 in dem CNC-Bearbeitungszentrum erfolgt mittels Unterdruck, der durch eine Vielzahl von Entlüftungsöffnungen in der Auflage, auf der die Bodenplatte aufliegt, aufgebracht wird.

Die Figur 2 zeigt eine Bodenplatte 1 a mit einem alternativen Feder-Nut-System. Dieses Feder-Nut-System weist eine Steckrichtung auf, die senkrecht zur Plattenebene ausgerichtet ist. Dieses Feder-Nut-System weist den Vorteil auf, dass benachbarte, miteinander verbundene Bodenplatten 1 a formschlüssig in Richtung der Plattenebene miteinander verbunden sind, wodurch ein ungewolltes Auseinanderschieben verhindert werden kann. Die Herstellung der Bodenplatte gemäß Figur 2 erfolgt entsprechend der Bodenplatte der Figur 1, wobei zum Einbringen der Nuten 3a auch ein Fingerfräser zum Einsatz kommen kann.

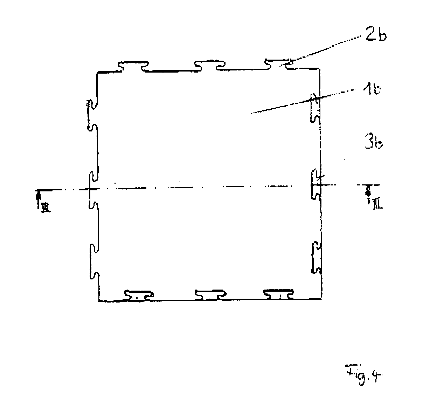

Die Figuren 3 und 4 zeigen eine Bodenplatte 1b mit einem puzzleförmigen Feder-Nut-System. Dieses Feder-Nut-System, das wiederum eine Steckrichtung aufweist, die senkrecht zur Plattenebene ausgerichtet ist, zeichnet sich durch Federelemente 2b sowie entsprechende Nuten 3b aus, die (in der Plattenebene) hinterschnittige Bereiche 4 ausbilden, so dass wiederum eine formschlüssige Verbindung benachbarter Bodenplatten 1b in Richtung der Plattenebene der Bodenplatten 1 b entsteht. In der Figur 3, die einen Schnitt durch die Bodenplatte der Figur 4 entlang der Linie III - III darstellt, ist zu erkennen, dass sich die Federelemente 2b sowie die korrespondierenden Nuten 3b nicht über die vollständige Dicke der Bodenplatte 1 b erstrecken. Selbstverständlich ist jedoch auch eine Ausführungsform möglich, bei der sich die Nuten über die gesamte Dicke der Bodenplatte erstrecken und die korrespondierenden Federelemente ebenfalls eine entsprechende Dicke aufweisen.

## Patentansprüche

1. Verfahren zum Herstellen von Bodenplatten (1; 1a; 1b) aus einem elastischen Kunststoffwerkstoff, **dadurch gekennzeichnet, dass** die Bodenplatten (1; 1a; 1b) zunächst urgeformt werden und daraufhin ein Feder-Nut-System spanend eingebracht wird.

2. Verfahren gemäß Anspruch 1, **gekennzeichnet durch** die Verwendung von PVC als Kunststoffwerkstoff.

3. Verfahren gemäß Anspruch 2, **gekennzeichnet durch** die Verwendung von PVC-Recyclingmaterial.

4. Verfahren gemäß einem der vorhergehenden Ansprüche, **dadurch gekennzeichnet, dass** ein Feder-Nut-System eingebracht wird, dessen Steckrichtung parallel zur Plattenebene ausgerichtet ist.

5. Verfahren gemäß Anspruch 4, **dadurch gekennzeichnet, dass** das Feder-Nut-System mit einem Kopf- und einem Seitenfräser eingebracht wird.

6. Verfahren gemäß einem der Ansprüche 1 bis 3, **dadurch gekennzeichnet, dass** ein Feder-Nut-System eingebracht wird, dessen Steckrichtung senkrecht zur Plattenebene ausgerichtet ist.

7. Verfahren gemäß Anspruch 6, **gekennzeichnet durch** ein puzzleförmiges Feder-Nut-System.

8. Verfahren gemäß Anspruch 6 oder 7, **dadurch gekennzeichnet, dass** das Feder-Nut-System mit einem Fingerfräser eingebracht wird.

9. Verfahren gemäß einem der vorhergehenden Ansprüchen, **dadurch gekennzeichnet, dass** die Bodenplatten (1; 1a; 1 b) spritzgegossen werden.

10. Verfahren gemäß einem der vorhergehenden Ansprüche, **dadurch gekennzeichnet, dass** die Bodenplatten (1; 1a; 1b) vor dem Einbringen des Feder-Nut-Systems zumindest einseitig abgeplant werden.

11. Verfahren gemäß Anspruch 10, **dadurch gekennzeichnet, dass** die Bodenplatten (1; 1a; 1 b) auf ihrer Unterseite plangefräßt werden.
